# EUROPEAN PATENT SPECIFICATION

(11) **EP 0 945 623 B1**
(45) Date of publication and mention of the grant of the patent: **13.08.2003**
(21) Application number: 99200764.1
(22) Date of filing: 15.03.1999
(51) Int. Cl.: F04D 27/02, G05D 7/06, F24F 11/00

(54) **A ventilation system**
Belüftungssystem
Système de ventilation

(30) Priority: 24.03.1998 IT MI980602
(43) Date of publication of application: 29.09.1999
(73) Proprietor: RPM S.p.A., 45021 Badia Polesine (Rovigo) (IT)
(72) Inventor: D'Andrea, Giovanni, 45021 Badia Polesine, Rovigo (IT)
(74) Representative: Perani, Aurelio

(56) References cited:
- EP-A- 0 572 149
- WO-A-98/04835
- DE-A- 4 117 611
- FR-A- 2 661 759
- US-A- 4 468 171
- US-A- 4 806 833
- US-A- 5 269 660

## Description

The present invention relates to a ventilation system.

A ventilation system, commonly used in heating and air-conditioning apparatus, is constituted by a fan driven by a suitable motor, for example, an asynchronous electric motor supplied by a variable-frequency alternating voltage. By correspondingly also varying the amplitude of the supply voltage, it is thus possible to achieve an approximate proportionality of the variation of the speed of rotation of the fan.

The asynchronous motor is generally supplied at a variable frequency and amplitude by means of an inverter which can transform a direct-voltage (obtained from an alternating mains voltage by means of a suitable rectifier) into a voltage with alternating behaviour of predetermined frequency and amplitude.

The regulation of operative parameters of the ventilation system, such as, for example, the flow-rate (that is, the volume of air which passes through a unitary cross-section per unit of time) or the ventilating pressure (that is, the useful work performed on one unit by weight of the air) requires suitable sensors which measure these operative parameters directly. For example, in a new installation, or after changes in the environmental conditions in which the ventilation system is installed, these sensors are installed temporarily at an outlet of the ventilation system in order to regulate its operative parameters. In general, the ventilating pressure and the flow-rate of the ventilation system are regulated by varying the speed of rotation of the asynchronous motor in dependence on the result of these measurements.

These known systems require the use of sensors (for detecting flow-rate or ventilating pressure) which are quite expensive and inaccurate. Moreover, complex regulation operations are required each time there is a change in the environmental conditions in which the ventilation system is fitted.

An example of these regulation systems is given by US-5,269,660 where, in addition to flow-rate and ventilating pressure detectors, in order to achieve a more precise control, an absorbed electric power detector and an effective motor rotational speed detector are optionally used.

This does not relief from measuring the parameter, flow-rate and/or pressure, which has to be controlled.

A different system for regulating the flow-rate is described in WO-A-91/17491. This solution consists in measuring the speed of rotation of the motor and then varying the amplitude of the supply voltage generated by the inverter on the basis of suitable pre-set relationships so as to achieve a required flow-rate.

A disadvantage of this known solution is that it requires the measurement of a mechanical quantity (the speed of rotation of the motor). This involves the use of sensors which are expensive and the operation of which may easily vary over time (for example, because of wear, different environmental conditions, or the like), rendering the entire ventilation system inconvenient and unreliable.

A similar teaching is provided by DE-4,117,611 where the flow rate of a ventilation system is controlled by measuring the speed of rotation of the motor and, at the same time the absorbed electrical power.

This information, combined with a system efficiency previously determined through the use of a total pressure threshold detector, allows to compute the actual flow rate and to control the rotational speed so as to achieve the desired flow rate.
In this case not only a rotational speed detector is required, but also a on-off pressure sensor and a wattmeter to monitor the consumed electrical power.

The object of the present invention is to overcome the aforementioned disadvantages. To achieve this object, a ventilation system as described in the first claim is proposed.

In short, the ventilation system provided comprises at least one fan, an electric motor for driving the at least one fan, a device for supplying the motor at a variable frequency, and a unit for controlling the operation of the ventilation system in response to a required value of at least one operative parameter of the ventilation system, consisting in, either a flow rate (Q), a ventilating pressure, or both, in which the control unit includes means for measuring an electrical power relating to the supply device, means for storing at least one relationship between the frequency, the power and the at least one operative parameter, means for calculating, from the at least one relationship, an actual value of the at least one operative parameter corresponding to an actual value of the frequency and of the power, and means for modifying the frequency in dependence on a comparison between the required value and the actual value of the at least one operative parameter.

Moreover, a control unit and a drive assembly (comprising the electric motor, the supply device and the control unit) for the ventilation system, a test unit, and a corresponding control method are also proposed.

Further characteristics and advantages of the ventilation system according to the present invention will become clear from the following description of a preferred embodiment thereof, given by way of nonlimiting example, with reference to the appended drawings, in which:
Figure 1 is a basic block diagram of the ventilation system,
Figure 2 is a graph of the curves with constant flow rate in a frequency/input-power plane,
Figure 3 shows a basic block diagram of a test unit.

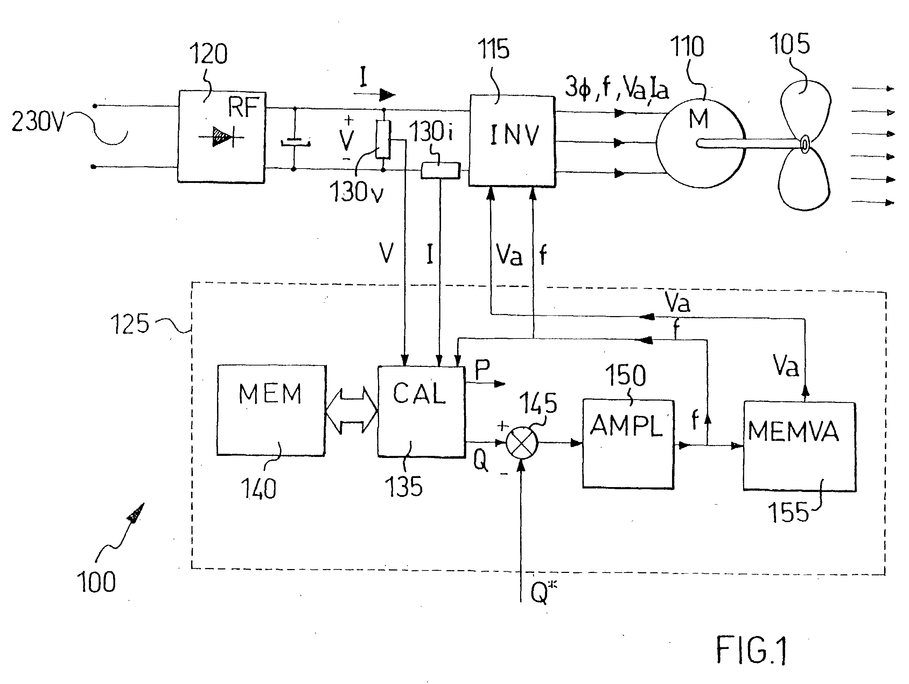

With reference in particular to Figure 1, this shows a ventilation system 100 for heating and air-conditioning apparatus (although its use in other applications is not excluded). The ventilation system 100 includes a centrifugal fan 105 which ensures movement of the air through heat-exchangers (not shown in the drawing) which cool or heat the air and modify its humidity characteristics. The fan 105 also circulates the air in the environment in which the system 100 is installed so as to ensure uniform distribution of the air, or exchange with an outside environment.

The fan 105 is driven by a suitable assembly comprising a three-phase asynchronous motor (M) 110 supplied by an inverter (INV) 115 formed, for example, by IGBT electronic switches. The ventilation system 100 is connected to a single-phase, alternating-current (sinusoidal) mains supply with an amplitude of 230 V. The alternating mains voltage is applied to a rectifier filter (RF) 120 formed, for example, by a diode bridge. The rectifier filter 120 outputs a direct-current voltage V (and a corresponding direct current I) which are supplied to the input of the inverter 115 which generates a three-phase alternating voltage with an amplitude Va and a frequency f (and a corresponding alternating current of amplitude Ia). The alternating voltage and current supply the asynchronous motor 110 in a manner such as to rotate the fan 105 at a predetermined speed. The ventilation system 100 also includes a control unit 125 (described in detail below) for regulating the flow-rate of the system.

Similar considerations apply if the fan is an axial fan, if the system includes two or more fans, if the asynchronous motor has a different number of phases (or even only one phase in a single-phase motor), if an electric motor of a different type, for example, a synchronous (brushless) motor with permanent magnets is used, if the mains supply provides a voltage of a different amplitude, or is a three-phase supply, or if a different device is provided for supplying the motor, etc. The solution of the present invention may also be used to adjust the ventilating pressure of the ventilation system, both the flow-rate and the ventilating pressure, or, in general, at least any one operative parameter of the system.

The control device 125 includes two sensors 130v and 130i which measure, respectively, the direct-voltage V and the direct current I input to the inverter 115. These values are supplied to a calculation unit (CAL) 135, preferably formed by a microprocessor which derives from these measured values, (for example, at predetermined time intervals) the power Pcc = V x I input to the inverter 115. This solution enables the power Pcc input to the inverter 115 to be determined extremely simply (by measuring two direct-current quantities and performing a simple calculation); alternatively, the power is measured differently, the power output by the inverter is measured or, in general, equivalent means are used to measure any electrical power relating to the inverter.

The calculation unit 135 is connected to a memory (MEM) 140 which stores a pre-set table (produced as described in detail below) which associates different values of the supply-voltage frequency f and of the power Pcc input to the inverter 115 with the value of the corresponding flow-rate Q of the ventilation system 100. Similar remarks apply if the memory 140 contains an equation or, in general, any relationship between the frequency f, the input power Pcc, and the at least one operative parameter of the system.

The calculation unit 135 obtains from the table the actual flow-rate value Q corresponding to an actual value of the frequency f (received as an input as described below) and of the power Pcc. In practice, it has been found that, in most common applications, satisfactory accuracy can be achieved by storing a limited number of values in the table and by determining intermediate situations by interpolation.

The actual flow-rate value Q is applied as an input to a comparison block 145 which finds the difference between the actual flow-rate value Q and a desired value Q* supplied, for example, by an external system for monitoring climatic conditions (not shown in the drawing). The flow-rate error Q-Q* is amplified by a suitable unit 150 which modifies the frequency f of the supply voltage independence on this error Q-Q*. For example, if the actual flow-rate Q is less than the required rate Q*, the frequency f will be increased; conversely, if the actual flow-rate Q is greater than the required rate Q*, the frequency f will be reduced. The modified frequency value f is supplied to the unit 135 (for a subsequent flow-rate calculation) and to the inverter 115 so as correspondingly to vary the speed of rotation of the asynchronous motor 110.

This value is also preferably supplied to a memory structure 155 which stores a further table (or an equivalent relationship) which associates different frequency values f with the corresponding supply-voltage amplitude value Va. The memory structure 155 derives the corresponding amplitude value Va from the modified frequency value f and supplies it to the inverter 115.

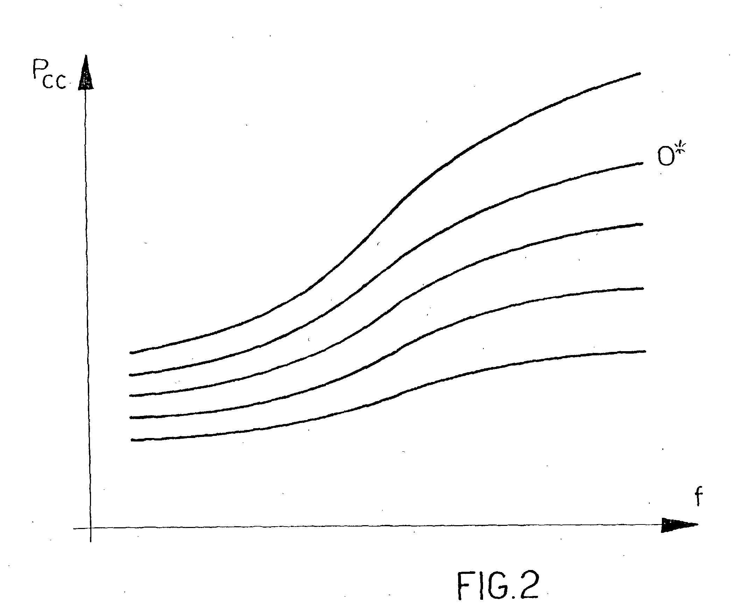

The system described above, for example, enables the flow-rate of air supplied by the ventilation system 100 to be kept constant at the predetermined value Q* with variations in the pressure losses of an air duct connected to the fan 105 and hence with variations in the ventilating pressure generated thereby. For this purpose, it will suffice to follow a curve relating to constant flow-rate which can be traced theoretically in the f/Pcc plane and which joins all of the points corresponding to the desired flow-rate Q*, as shown in Figure 2. Similarly, the ventilation system described above can be used to keep the ventilating pressure, rather than the flow-rate, generated by the fan at a constant predetermined value. Or on the other hand, the system can be made to follow a flow-rate/ventilating-pressure curve of desired shape in a manner compatible with the conditions of instability which may be encountered for particular selections.

The ventilation system of the present invention enables the operative parameters of the system to be controlled extremely simply and economically.

This solution uses only electrical quantities which can easily be detected; it does not need any sensors directly measuring the operative parameters of the ventilation system or the speed of rotation of the motor. This greatly simplifies the ventilation system which is consequently less expensive and more reliable.

In an alternative embodiment of the present invention, other quantities relating to the operation of the ventilation system are also measured. This permits compensation for variations in behaviour due to different ambient temperatures, to errors, to working tolerances, and the like. For example, two (or more) different tables are stored for different temperatures; the actual speed of rotation of the asynchronous motor (or another equivalent quantity) for a given pair of frequency f and input-power Pcc values is also stored in each table (in addition to flow-rate and ventilating pressure).

Given the actual values of frequency f and input power Pcc, and if the speed of rotation is known, more accurate values of the flow-rate and of the ventilating pressure are calculated by interpolation between the values determined from the two tables, even though the temperature is not known. The interpolation will be proportional to the deviation of the speed actually measured from the speed values obtained from the two tables stored. The laws of the relationships thus determined with greater accuracy will be used to control the system at constant flow-rate and/or ventilating pressure in a manner wholly analogous to that described above. This method requires a larger amount of data to be stored and more complex calculations to be performed, but ensures more accurate results.

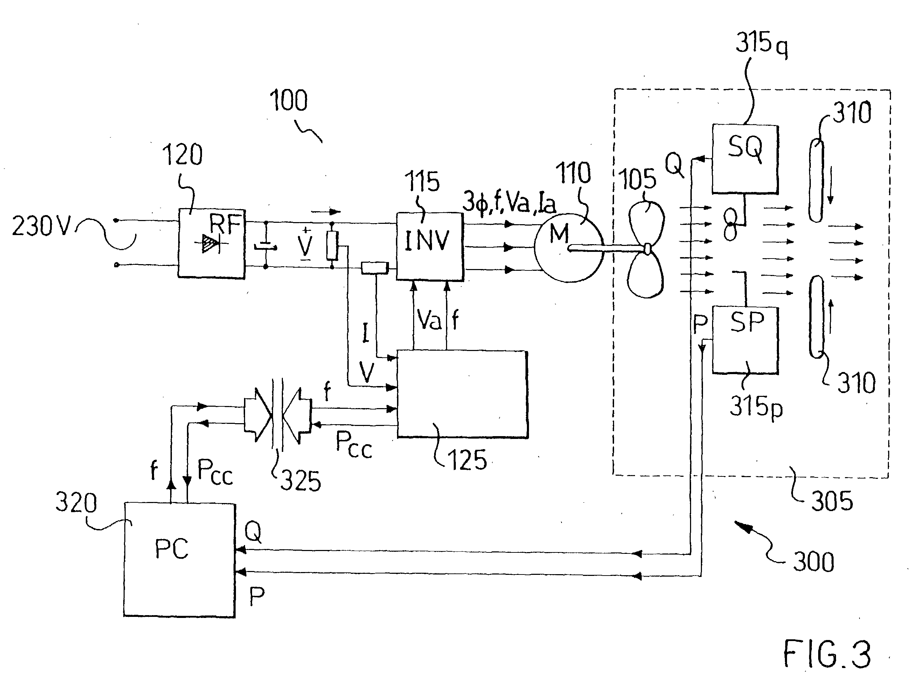

With reference now to Figure 3 (the elements already shown in Figure 1 are indicated by the same reference numerals or symbols), this shows an embodiment of a test unit 300 for drawing up the above-described tables experimentally. The ventilation system 100 is mounted in a test installation 305 which has members (gates) 310 for limiting the air-flow, enabling the pressure losses in the air-ducts to be varied. The test installation 305 has a flow-rate sensor 315q and a ventilating pressure sensor 315p which measure the flow-rate Q and the ventilating pressure P produced by the ventilation system 100, respectively.

The flow-rate and ventilating pressure values Q and P measured by the sensors 315q, 315p are supplied to a personal computer (PC) 320, or to other equivalent processing means. The personal computer 320 is also connected, by means of a bi-directional, optically-isolated photo-coupling device 325 comprising, for example, a light-emitting diode (LED) and a photodiode (or by other equivalent transmission means), to the control unit 125 in order to set a value of the supply-voltage frequency f and to receive the value Pcc of the power input to the inverter 115.

The personal computer 320 sets a series of frequency values f for the inverter 115 and, for each value, the output ventilating pressure P is varied gradually by varying the pressure losses in the duct of the test installation 305. For predetermined flow-rate and/or ventilating-pressure values, the personal computer 320 records the corresponding other quantities. The desired table which defines the relationship between the frequency f, the input power Pcc, the flow-rate Q and the ventilating pressure P, is thus formed in the memory of the personal computer 320. This solution enables this table to be produced automatically and extremely easily. Alternatively, the measurements are performed by other methods, for example, by manually recording the pairs of frequency f and input-power Pcc values and the corresponding pairs of flow-rate and pressure values Q and P, etc.

The table thus determined is valid for any type of control subsequently selected for the ventilation system, for example, with constant flow-rate, with constant pressure, with a flow-rate/pressure curve of a desired shape, etc. The table is representative of the characteristics both of the fan and of the motor and can be extended to all systems with characteristics which may be considered sufficiently similar. This applies, in particular to inverters, motors and fans of the same model, provided that the variations of the characteristics from one example to another can be kept within fairly narrow limits.

The experimental determination of the above-described table is particularly quick and easy and is preferable to its theoretical determination (although this possibility is not excluded). In fact, for an asynchronous motor supplied by an inverter, if the characteristics of the motor itself are known, it is possible to determine the torque generated and the speed of rotation if the supply frequency f and the power supplied to the motor are known. Clearly, this is a first approximation, the speed of rotation being approximately proportional to the supply frequency f and the power to the shaft being the product of the torque and the speed. The power to the shaft can be determined once the output of the motor which, in these applications, is quite high, is known. A more precise knowledge of the characteristics of the motor enables the speed and the torque to be calculated more accurately from the supply frequency f and from the power input to the motor once the law correlating the amplitude Va of the voltage generated by the inverter with its frequency f has been assigned. Finally, if the efficiency of the inverter is known, the power supplied to the motor can be deduced from a knowledge of the power Pcc input to the inverter. For a given ventilation system and for given values of the frequency f and of the power Pcc input to the inverter, the values of the flow-rate Q and of the ventilating pressure P generated are thus determined. It is thus possible, in theory, if the characteristics of the inverter, of the motor and of the fan connected thereto are known, to obtain the flow-rate Q and the pressure P from the knowledge of the supply frequency f and of the power Pcc input to the inverter. Although such a theoretical calculation is possible, it is in fact laborious and is dependent on many parameters which are not easy to determine.

The photo-coupling device 325 is preferably also used for the storage of a programme and of the above-described tables in the control unit 125 upon completion of the construction of the ventilation system 100 as a whole. This facilitates mass-production of the drive assembly and storage of the appropriate table once the assembly is connected to a given fan 105.

Naturally, in order to satisfy contingent and specific requirements, an expert in the art may apply to the above- described ventilation system many modifications and variations all of which, however, are included within the scope of protection of the invention as defined by the following claims.

## Claims

1. A ventilation system (100) comprising at least one fan (105), an electric motor (110) for driving the at least one fan (105), a device (115) for supplying the motor (110) at a variable frequency (f), and a unit (125) for controlling the operation of the ventilation system (100) in response to a required value (Q*) of at least one operative parameter of the ventilation system (100) consisting in either a flow rate (Q), a ventilation pressure (P) or both, the control unit (125) including means (130v, 130i, 135) for measuring an electrical power (Pcc) relating to the supply device (115) and means (145,150) for modifying the frequency (f) in dependence of a comparison between the required value (Q*) and an actual value (Q,P) of the at least one operative parameter,
**characterised in that**
said control unit (125) further includes memory means (140) storing at least one relationship between the frequency (f), the power (Pcc) and the at least one operative parameter (Q,P) and means (135) for calculating, from the at least one relationship, the actual value (Q,P) of the at least one operative parameter corresponding to an actual value of the frequency (f) and of the power (Pcc).

2. A ventilation system according to Claim 1 where said means (130v, 130i, 135) for measuring an electrical power, are the only measurement means of the system.

3. A ventilation system according to Claim 1 further comprising means for measuring at least one quantity, other than flow rate (Q) and ventilation pressure (P) relating to the operation of the ventilation system and in which the memory means (140) stores a plurality of said relationships, each corresponding to a different value of said quantity, the calculation means (135) determining the actual value (Q,P) of the at least one operative parameter, by interpolating the actual values (Q,P) of the at least one operative parameter derived from each of the relationships in dependence on an actual value of said at least one quantity.

4. A ventilation system according to any one of Claims 1 to 3, in which the supply device is an inverter (115) which receives as input a direct voltage (V) and a direct current (I), and in which the power (Pcc) is a power input to the supply device (115), the measurement means (130v, 130i, 135) comprising a first sensor (130v) and a second sensor (130i) for measuring the direct voltage (V) and the direct current (I) input to the supply device (115), respectively.

5. A ventilation system according to any one of Claims 1 to 4, in which the at least one relationship is constituted by a table which includes a plurality of pairs of values of frequency (f) and power (Pcc) with each of which a corresponding value of the at least one operative parameter (Q,P) is associated, the calculation means (135) determining the actual value (Q,P) of the at least one operative parameter corresponding to a pair of actual values of the frequency (f) and of the power (Pcc) which is not included in the table by an interpolation process.

6. A ventilation system according to any one of Claims 1 to 5, further comprising means (155) for modifying an amplitude (Va) of the supply voltage in dependence on the frequency (f).

7. A ventilation system according to any one of Claims 1 to 6, further comprising transmission means (325) for storing the at least one relationship in the memory means (140).

8. A method of controlling the operation of a ventilation system (100) in response to a required value (Q*) of at least one operative parameter of the ventilation system consisting in either a flow rate (Q), a ventilation pressure (P) or both, in which the ventilation system comprises at least one fan (105), an electric motor (110) for driving the at least one fan, and a device (115) for supplying the motor at a variable frequency (f), the method being **characterised by** the steps of:
a) measuring an electrical power (Pcc) relating to the supply device,
b) calculating from at least one relationship between the frequency (f), the power (Pcc) and the at least one operative parameter (Q,P), an actual value of the at least one operative parameter (Q,P) corresponding to an actual value of the frequency (f) and of the power (Pcc),
c) modifying the frequency (f) in dependence on a comparison between the required value (Q*) and the actual value (Q,P) of at least one operative parameter.

## Patentansprüche

1. Ventilationssystem (100), umfassend zumindest einen Ventilator (105), einen elektrischen Motor (110) zum Antreiben des zumindest einen Ventilators, eine Vorrichtung (115) zum Versorgen des Motors (110) bei einer variablen Frequenz (f) und eine Einheit (125) zum Steuern des Betriebs des Ventilationssystems (100) in Antwort auf einen Sollwert (Q*) von zumindest einem Betriebsparameter des Ventilationssystems (100), der aus entweder einer Flussrate (Q), einem Ventilationsdruck (P) oder beidem besteht, wobei die Steuereinheit (125) Mittel (130v, 130i, 135) zum Messen einer auf die Versorgungsvorrichtung bezogenen elektrischen Leistung (Pcc) und Mittel (145, 150) zum Modifizieren der Frequenz (f) in Abhängigkeit von einem Vergleich zwischen dem Sollwert (Q*) und einem Istwert (Q, P) des zumindest einen Betriebsparameters enthält,
**dadurch gekennzeichnet, dass**
die Steuereinheit (125) weiterhin Speichermittel (140), die zumindest eine Beziehung zwischen der Frequenz (f), der Leistung (Pcc) und dem zumindest einen Betriebsparameter (Q, P) speichern, und Mittel (135) zum Berechnen des Istwerts (Q, P) des zumindest einen Betriebsparameters, der einem Istwert der Frequenz (f) und der Leistung (Pcc) entspricht, aus der zumindest einen Beziehung, enthält.

2. Ventilationssystem gemäß Anspruch 1, wobei das Mittel (130v, 130i, 135) zum Messen einer elektrischen Leistung die einzigen Messmittel des Systems sind.

3. Ventilationssystem gemäß Anspruch 1, weiterhin umfassend Mittel zum Messen zumindest einer anderen Größe als der Flussrate (Q) und dem Ventilationsdruck (P), die sich auf den Betrieb des Ventilationssystems bezieht und bei dem das Speichermittel (140) eine Mehrzahl dieser Beziehungen speichert, die jede einem anderen Wert der Größe entspricht, wobei das Berechnungsmittel (135) den Istwert (Q, P) des zumindest einen Betriebsparameters durch Interpolation des (stwerts (Q, P) des zumindest einen Betriebsparameters feststellt, der von jeder der Beziehungen in Abhängigkeit von einem Istwert der zumindest einen Größe abgeleitet ist.

4. Ventilationssystem gemäß einem der Ansprüche 1 bis 3, bei dem die Versorgungsvorrichtung ein Wechselrichter (115) ist, der als Eingabe eine Gleichspannung (V) und einen Gleichstrom (I) empfängt und in dem die Leistung (Pcc) eine Leistungseingabe an die Versorgungsvorrichtung (115) ist, wobei das Messmittel (130v, 130i, 135) einen ersten Sensor (130v) und einen zweiten Sensor (130i) zum Messen der Gleichspannungs- (V) bzw der Gleichstrom- (I) Eingabe an die Versorgungsvorrichtung (115) umfasst.

5. Ventilationssystem gemäß einem der Ansprüche 1 bis 4, bei dem zumindest eine Beziehung durch eine Tabelle gebildet ist, die eine Mehrzahl von Wertepaaren von Frequenz (f) und Leistung (Pcc), mit jedem von denen ein entsprechender Wert des zumindest einen Betriebsparameters (Q, P) assoziiert ist, wobei das Berechnungsmittel den Istwert (Q, P) des zumindest einen, zu einem Paar von Istwerten der Frequenz (f) und der Leistung (Pcc) gehörigen Betriebsparameters, der nicht in der Tabelle enthalten ist, durch ein Interpolationsverfahren feststellt.

6. Ventilationssystem gemäß einem der Ansprüche 1 bis 5, weiterhin Mittel (155) zum Modifizieren einer Amplitude (Va) der Versorgungsspannung in Abhängigkeit von der Frequenz (f) umfassend.

7. Ventilationssystem gemäß einem der Ansprüche 1 bis 6, weiterhin Übertragungsmittel (325) zum Speichern der zumindest einen Beziehung im Speichermittel (140) umfassend.

8. Verfahren zum Steuern des Betriebs eines Ventilationssystems (100) in Antwort auf einen Sollwert (Q*) von zumindest einem Betriebsparameter des Ventilationssystems (100), der aus entweder einer Flussrate (Q), einem Ventilationsdruck (P) oder beidem besteht, bei dem das Ventilationssystem zumindest einen Ventilator (105), einen elektrischen Motor (110) zum Antreiben des zumindest einen Ventilators und eine Vorrichtung (115) zum Versorgen des Motors (110) bei einer variablen Frequenz (f) umfasst, wobei das Verfahren durch die Schritte gekennzeichnet ist:
a) Messen einer auf die Versorgungsvorrichtung bezogenen elektrischen Leistung (Pcc),
b) Berechnen aus zumindest einer Beziehung zwischen der Frequenz (f), der Leistung (Pcc) und dem zumindest einen Betriebsparameter (Q, P) eines Istwerts (Q, P) des zumindest einen Betriebsparameters, der einem Istwert der Frequenz (f) und der Leistung (Pcc) entspricht,
c) Modifizieren der Frequenz (f) in Abhängigkeit von einem Vergleich zwischen dem Sollwert (Q*) und dem Istwert (Q, P) zumindest eines Betriebsparameters.

## Revendications

1. Système de ventilation (100), comprenant au moins un ventilateur (105), un moteur électrique (110) pour entraîner cet au moins un ventilateur (105), un dispositif (115) pour alimenter le moteur (110) à une fréquence variable (f), et une unité (125) pour commander le fonctionnement du système de ventilation (100) en réponse à une valeur requise (Q*) d'au moins un paramètre opératoire du système de ventilation (100), constitué, soit d'un débit (Q) ou d'une pression de ventilation (P), soit des deux, l'unité de commande (125) incluant des moyens (130v, 130i, 135) pour mesurer une puissance électrique (Pcc) se rapportant au dispositif d'alimentation (115), et des moyens (145, 150) pour modifier la fréquence (f) en fonction d'une comparaison entre la valeur requise (Q*) et une valeur réelle (Q, P) de cet au moins un paramètre opératoire,
**caractérisé en ce que**
ladite unité de commande (125) inclut, en outre, des moyens de mémoire (140) mémorisant au moins une relation entre la fréquence (f), la puissance (Pcc) et cet au moins un paramètre opératoire (Q, P), et des moyens (135) pour calculer, à partir de cette au moins une relation, la valeur réelle (Q, P) de cet au moins un paramètre opératoire correspondant à une valeur réelle de la fréquence (f) et de la puissance (Pcc).

2. Système de ventilation selon la revendication 1, dans lequel lesdits moyens (130v, 130i, 135) pour mesurer une puissance électrique sont les seuls moyens de mesure du système.

3. Système de ventilation selon la revendication 1, comprenant, en outre, des moyens pour mesurer au moins une quantité, autre que le débit (Q) et la pression de ventilation (P), se rapportant au fonctionnement du système de ventilation, et dans lequel les moyens de mémoire (140) mémorisent une pluralité desdites relations, chacune correspondant à une valeur différente de ladite quantité, les moyens de calcul (135) déterminant la valeur réelle (Q, P) de cet au moins un paramètre opératoire, en interpolant les valeurs réelles (Q, P) de cet au moins un paramètre opératoire, qui sont dérivées de chacune des relations en fonction d'une valeur réelle de ladite au moins une quantité.

4. Système de ventilation selon l'une quelconque des revendications 1 à 3, dans lequel le dispositif d'alimentation est un inverseur (115) qui reçoit, en tant que signal d'entrée, une tension continue (V) et un courant continu (I), et dans lequel la puissance (Pcc) est une puissance entrée dans le dispositif d'alimentation (115), les moyens de mesure (130v, 130i, 135) comprenant un premier capteur (130v) et un second capteur (130i) pour mesurer la tension continue (V) et le courant continu (I) entrés dans le dispositif d'alimentation (115), respectivement.

5. Système de ventilation selon l'une quelconque des revendications 1 à 4, dans lequel cette au moins une relation est constituée par une table qui contient une pluralité de paires de valeurs de fréquence (f) et de puissance (Pcc), à chacune d'entre elles une valeur correspondante de cet au moins un paramètre opératoire (Q, P) étant associée, les moyens de calcul (135) déterminant la valeur réelle (Q, P) de cet au moins un paramètre opératoire correspondant à une paire de valeurs réelles de la fréquence (f) et de la puissance (Pcc) qui n'est pas contenue dans la table, par un processus d'interpolation.

6. Système de ventilation selon l'une quelconque des revendications 1 à 5, comprenant, en outre, des moyens (155) pour modifier une amplitude (Va) de la tension d'alimentation en fonction de la fréquence (f).

7. Système de ventilation selon l'une quelconque des revendications 1 à 6, comprenant, en outre, des moyens de transmission (325) pour mémoriser cette au moins une relation dans les moyens de mémoire (140).

8. Procédé pour commander le fonctionnement d'un système de ventilation (100) en réponse à une valeur requise (Q*) d'au moins un paramètre opératoire du système de ventilation, constitué, soit d'un débit (Q) ou d'une pression de ventilation (P), soit des deux, dans lequel le système de ventilation comprend au moins un ventilateur (105), un moteur électrique (110) pour entraîner cet au moins un ventilateur (105) et un dispositif (115) pour alimenter le moteur (110) à une fréquence variable (f), le procédé étant **caractérisé par** les étapes consistant :
a) à mesurer une puissance électrique (Pcc) se rapportant au dispositif d'alimentation,
b) à calculer, à partir d'au moins une relation entre la fréquence (f), la puissance (Pcc) et cet au moins un paramètre opératoire (Q, P), une valeur réelle de cet au moins un paramètre opératoire (Q, P) correspondant à une valeur réelle de la fréquence (f) et de la puissance (Pcc),
c) à modifier la fréquence (f) en fonction d'une comparaison entre la valeur requise (Q*) et la valeur réelle (Q, P) de cet au moins un paramètre opératoire.
